# EUROPÄISCHE PATENTSCHRIFT

(11) **EP 2 458 688 B1**
(45) Veröffentlichungstag und Bekanntmachung des Hinweises auf die Patenterteilung: **30.09.2015**
(21) Anmeldenummer: 11009010.7
(22) Anmeldetag: 12.11.2011
(51) Int. Cl.: H01R 4/64, H01R 9/24, H02G 3/32, F16L 3/13

(54) **Befestigungsvorrichtung zur Ausbildung einer elektrischen und/oder mechanischen Verbindung zwischen einer Stromschiene, Montageplatte oder leitenden Montagefläche und einer elektrischen Leitung**
Fixing device for forming an electric and/or mechanical connection between a powered rail, mounting plate or conductive mounting surface and an electric conductor
Dispositif de fixation pour le développement d'une liaison électrique et/ou mécanique entre un rail électrique, une plaque de montage ou une surface de montage conductrice et une conducteur électrique

(30) Priorität: 26.11.2010 DE 102010052733
(43) Veröffentlichungstag der Anmeldung: 30.05.2012
(73) Patentinhaber: HEBOTEC GmbH, 72116 Mössingen (DE)
(72) Erfinder: Böhringer, Markus, 72116 Mössingen (DE); Hermann, Gerold, 72108 Rottenburg am Neckar (DE)
(74) Vertreter: Kohler Schmid Möbus Patentanwälte

(56) Entgegenhaltungen:
- DE-U- 1 827 451
- FR-A1- 2 417 027
- GB-A- 1 269 332
- US-A- 2 375 513
- US-A- 3 185 418
- US-A1- 2005 109 887
- US-A1- 2009 057 498
- US-A1- 2010 155 545
- US-A1- 2010 258 685

## Beschreibung

Die Erfindung betrifft eine Befestigungsvorrichtung zur Ausbildung einer elektrischen und/oder mechanischen Verbindung zwischen einer Stromschiene, Montageplatte oder leitenden Montagefläche und einer elektrischen Leitung, nach dem Oberbegriff des Anspruchs 1.

Die Befestigungsvorrichtung dient vor allem der Ausbildung elektrischer und/oder mechanischer Verbindungen zwischen einer oder mehreren elektrischen Leitungen und einer Stromschiene, Montageplatte oder leitenden Montagefläche von Schaltschränken.

Befestigungsvorrichtungen dieser Art sind aus der der US 2005/109887 A1, GB 1 269 332 A, FR 2 417 027 A1 und DE 18 27 451 U bekannt geworden. Die bekannten Befestigungsvorrichtungen weisen Klammern zur Aufnahme elektrischer Leitungen auf, die über Träger an der Stromschiene, Montageplatte oder leitenden Montagefläche angeordnet werden. Sollen elektrische Leitungen mit unterschiedlichen Durchmessern elektrisch und/oder mechanisch mit der Stromschiene, Montageplatte oder leitenden Montagefläche verbunden werden, so müssen für jeden Leitungsdurchmesser separate Träger oder gesamte Befestigungsvorrichtungen zur Verfügung gestellt werden. Außerdem ist bei den bekannten Vorrichtungen keine spielfreie Halterung am Träger oder nur auf konstruktiv aufwändige Weise möglich

Der Erfindung liegt die Aufgabe zugrunde, eine Befestigungsvorrichtung bereitzustellen, die flexibel auf elektrische Leitungen mit unterschiedlichen Durchmessern angepasst werden kann und eine sichere Halterung der Klammern auf einfache Weise ermöglicht.

Diese Aufgabe wird erfindungsgemäß durch eine Befestigungsvorrichtung mit den Merkmalen des Anspruchs 1 gelöst.

Bei der erfindungsgemäßen Befestigungsvorrichtung müssen nur unterschiedliche Klammern für unterschiedliche Leitungsdurchmesser zur Verfügung gestellt werden, während die Träger für alle Leitungsgrößen identisch gestaltet sind.

Der Träger kann durch die über eine Rastverbindung mit dem Träger verbundene Klammer auch im Falle eines Austauschs der elektrischen Leitung an der Stromschiene, Montageplatte oder leitenden Montagefläche verbleiben. Wenn ein Benutzer eine elektrische Leitung mit einem anderen Durchmesser mit der Stromschiene, Montageplatte oder leitenden Montagefläche verbinden will, muss somit lediglich die Klammer gewechselt werden.

Vorteilhafterweise ist der Träger in der Regel wesentlich größer als die Klammer, sodass lediglich der kleinere Teil der Befestigungsvorrichtung den unterschiedlichen Leitungsgrößen angepasst werden muss.

Bei der Stromschiene, Montageplatte oder leitenden Montagefläche kann es sich, wie zuvor erwähnt, insbesondere um eine an einem Schaltschrank angeordnete Stromschiene, Montageplatte oder leitende Montagefläche handeln. Unter Stromschiene, Montageplatte oder leitender Montagefläche im Sinne der Erfindung werden allerdings jegliche elektrische Leiter, beispielsweise auch Sammelschienen, Kabel oder elektrische Leiter einer Platine verstanden. Ferner kann es sich bei den Klammern um Schirmklammern handeln.

Es sind mehrere Klammern mit unterschiedlich dimensionierten Schenkeln, aber gleich großen Fußteilen vorgesehen. Am Träger ist dadurch eine normierte Rastverbindung zur Aufnahme dieser Klammern mit unterschiedlich dimensionierten Schenkeln vorgesehen. Die Befestigungsvorrichtung ist so besonders flexibel auf unterschiedliche elektrische Leitungen anpassbar.

Zur Aufnahme der Klammern weist der Träger zwei Vorsprünge auf. Die Vorsprünge sind dabei derart beabstandet voneinander angeordnet, dass sie in zwei Eckbereiche einer Ausnehmung des Fußteils der Klammer eingreifen. Die Klammer kann auf diese Art und Weise im Wesentlichen spielfrei am Träger gehalten werden.

Weiterhin kann der Träger zumindest einen weiteren Rastvorsprung aufweisen. In bevorzugter Ausgestaltung der Erfindung kann die Klammer dann in den mindestens einen Vorsprung eingeführt und mittels des mindestens einen Rastvorsprungs mit dem Träger verrastet werden.

Am Träger kann ferner zumindest ein Fortsatz zur Aufnahme einer Zugentlastung, beispielsweise in Form eines Kabelbinders, vorgesehen sein. Bei dem Fortsatz kann es sich um einen am Träger angeordneten oder ausgebildeten Vorsprung, beispielsweise in Form eines Metallstreifens, handeln. Der Fortsatz ist vorzugsweise tailliert ausgebildet, sodass sich die am Fortsatz befestigte Zugentlastung nicht oder nur in Grenzen verschieben kann.

Der Träger kann lösbar oder unlösbar mit der Stromschiene, Montageplatte oder leitenden Montagefläche verbunden werden. Der Träger kann beispielsweise durch eine Klebe-, Niet- oder Schraubverbindung an der Stromschiene, Montageplatte oder leitenden Montagefläche angeordnet werden.

In einer bevorzugten Ausgestaltung der Erfindung ist der Träger durch eine Rastverbindung an der Stromschiene, Montageplatte oder leitenden Montagefläche anordenbar. Hierzu kann der Träger zumindest einen elastischen Verbindungsteil zur Anordnung des Trägers an der Stromschiene, Montageplatte oder leitenden Montagefläche, insbesondere einer im Querschnitt hutförmigen Stromschiene aufweisen. Im Falle einer im Querschnitt hutförmig ausgebildeten Stromschiene kann der Träger zwei elastische Verbindungsteile aufweisen, die derart ausgebildet sind, ... frei abstehende Bereiche der Stromschiene zu hintergreifen. Der Träger kann dabei verschiebbar an der Stromschiene angeordnet werden. In diesem Fall ergibt sich der Vorteil, dass die Befestigungsvorrichtung an der Stromschiene positioniert werden kann, ohne den Träger, die Klammer oder die elektrische Leitung abnehmen zu müssen.

Der Verbindungsteil des Trägers kann auch im Wesentlichen U-förmig ausgebildet sein, um eine Stromschiene, Montageplatte oder leitende Montagefläche, insbesondere eine im Querschnitt rechteckige Stromschiene, zumindest teilweise umfassen zu können. Auch im Falle eines im Wesentlichen U-förmig ausgebildeten Verbindungsteils kann der Träger an der Stromschiene, Montageplatte oder leitenden Montagefläche verschiebbar sein.

Der Träger kann darüber hinaus rastend an der Stromschiene, Montageplatte oder leitenden Montagefläche befestigbar sein. Hierzu kann der Träger mit entsprechenden Rastnasen ausgebildet sein, die die Stromschiene, Montageplatte oder leitende Montagefläche oder Öffnungen der Stromschiene, Montageplatte oder leitenden Montagefläche hintergreifen.

In einer besonders einfachen Ausführungsform der Erfindung kann der Träger mittels einer Schraube mit der Stromschiene, Montageplatte oder leitenden Montagefläche verbindbar sein. Es versteht sich, dass alternativ oder zusätzlich dazu auch eine Rastverbindung und/oder zuvor beschriebene Verbindungsteile vorgesehen sein können.

Der Träger ist vorzugsweise einteilig ausgebildet. Der Träger kann dadurch kostengünstig, beispielsweise durch Stanz- und/oder Biegeprozesse, aus einem Metallblech hergestellt werden.

Sollen mehrere Leitungen elektrisch und/oder mechanisch mit der Stromschiene, Montageplatte oder leitenden Montagefläche verbunden werden, können mehrere Träger, insbesondere mehrere Träger, die an Sollbruchstellen miteinander verbunden sind, vorgesehen sein. Durch die Sollbruchstellen kann die Anzahl der Träger auf einfache Art und Weise vom Benutzer gewählt werden. Aufgrund der Verbindung der Träger untereinander kann es ausreichen, nur einzelne Träger an den Stromschienen, Montageplatten oder leitenden Montageflächen zu befestigen, was die Montage der Befestigungsvorrichtung vereinfacht.

Zusätzlich zu der Rastverbindung der Klammer mit dem Träger kann die Klammer an ihrem Fußteil eine insbesondere runde Öffnung aufweisen, um die Klammer auch noch über eine Schraube mit dem Träger verbinden zu können. Mittels der Öffnung wird auch eine direkte Schraubverbindung der Klammer mit der Stromschiene, Montageplatte oder leitenden Montagefläche oder einem anderen Bauteil ermöglicht.

In einem besonders bevorzugten Ausführungsbeispiel der Erfindung kann die Klammer einteilig ausgebildet sein. Die Klammer kann in diesem Fall ebenso wie der Träger durch Biege- und/oder Stanzprozesse aus einem Metallblech hergestellt werden.

Die Erfindung umfasst weiterhin einen einzelnen Träger sowie eine einzelne Klammer einer zuvor beschriebenen Befestigungsvorrichtung.

Weitere Vorteile ergeben sich aus der Zeichnung, die perspektivische Darstellungen verschiedener Träger und Klammern von Befestigungsvorrichtungen darstellt.

Es zeigen:
- Fig. 1: einen ersten Träger, der mit einer Stromschiene, Montageplatte oder leitenden Montagefläche verschraubbar ist;
- Fig. 2: eine erste Klammer zur Aufnahme einer elektrischen Leitung;
- Fig. 3: eine zweite Klammer zur Aufnahme einer elektrischen Leitung;
- Fig. 4: einen zweiten Träger, der an einer im Querschnitt hutförmigen Stromschiene verrastbar ist; und
- Fig. 5: einen dritten Träger, der an einer im Querschnitt rechteckförmigen Stromschiene anordenbar ist.

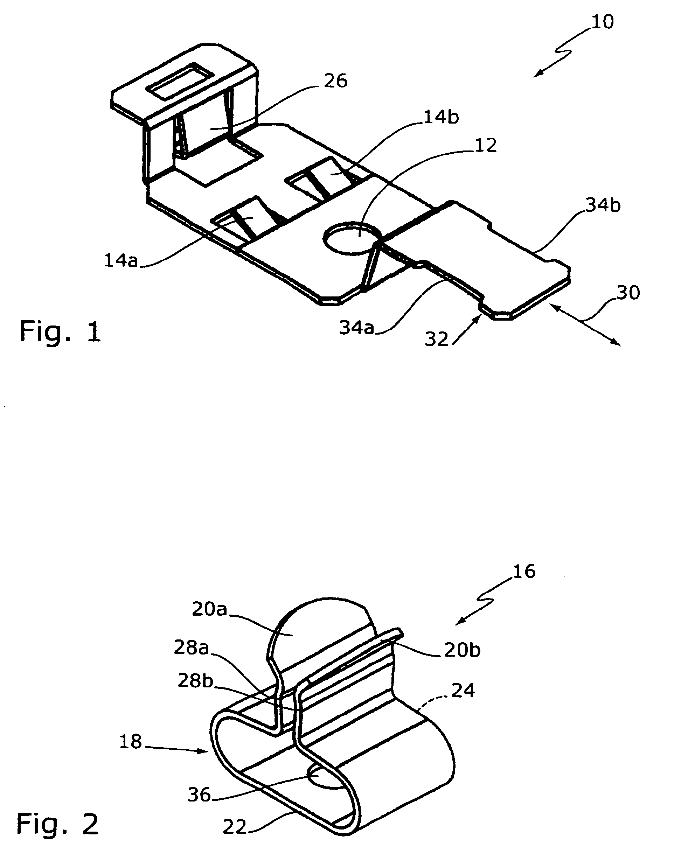

Fig. 1 zeigt einen ersten Träger 10 einer Befestigungsvorrichtung zur Ausbildung einer elektrischen und/oder mechanischen Verbindung zwischen einer Stromschiene, Montageplatte oder leitenden Montagefläche und einer elektrischen Leitung. Der als Blechstanzteil hergestellte Träger 10 weist in einem mittleren Bereich eine Öffnung 12 auf. Durch die Öffnung 12 ist der Träger 10 mittels einer Schraube mit einer Stromschiene, Montageplatte oder leitenden Montagefläche (beide nicht dargestellt) verbindbar.

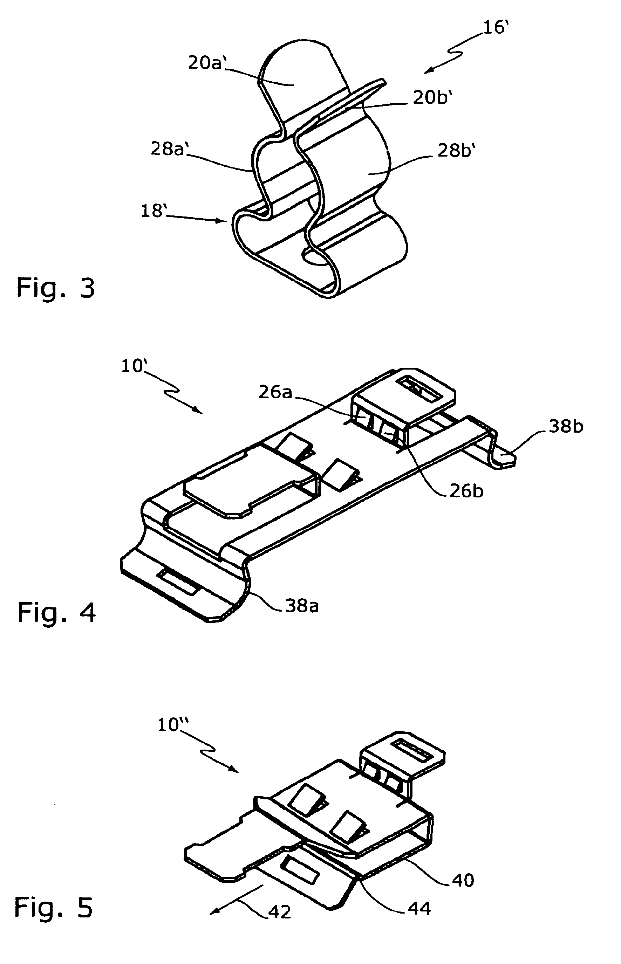

Der Träger 10 weist weiterhin zwei Rastvorsprünge 14a, 14b zur Aufnahme einer Klammer auf. Eine solche Klammer ist beispielsweise in den Fig. 2 und 3 dargestellt. Die Verbindung des Trägers 10 mit einer Klammer wird daher im Folgenden in Zusammenschau mit der Fig. 2 erläutert.

Fig. 2 zeigt eine erste Klammer 16, die einteilig ausgebildet ist. Die Klammer 16 weist einen Fußteil 18 und zwei Schenkel 20a, 20b auf. Zur Verbindung der Klammer 16 mit dem Träger 10 wird zuerst eine erste Längsseite 22 des Fußteils 18 unter die Vorsprünge 14a, 14b des Trägers 10 geschoben. Anschließend wird die Klammer 16 nach unten gedrückt, wobei eine der ersten Längsseite 22 gegenüberliegende zweite Längsseite 24 (in Fig. 2 verdeckt) der Klammer 16 durch einen Rastvorsprung 26 des Trägers 10 verrastet wird. Um die Klammer 16 wieder vom Träger 10 zu lösen, kann der Rastvorsprung 26 mittels eines Schraubendrehers oder dergleichen zurückgedrückt werden, wodurch die Verbindung zwischen dem Träger 10 und der Klammer 16 gelöst wird. Um die Betätigung der Rastverbindung zwischen dem Träger 10 und der Klammer 16 zu erleichtern, ist lediglich ein einziger Rastvorsprung 26 am Träger 10 vorgesehen.

Die Klammer 16 kann zwischen den Schenkeln 20a, 20b eine elektrische Leitung (nicht dargestellt) aufnehmen. Die Leitung kann dazu von oben in die Klammer 16 eingeführt werden. Dabei werden die Schenkel 20a, 20b der Klammer 16 auseinander gedrückt. Die Schenkel 20a, 20b weisen Ausnehmungen 28a, 28b auf, zwischen die die elektrische Leitung durch die Federkraft der Schenkel 20a, 20b eingeklemmt wird. Hierdurch kann eine sichere elektrische und/oder mechanische Verbindung der Klammer 16 mit einer elektrischen Leitung erreicht werden.

Die Klammer 16 weist außerdem eine Öffnung 36 auf, durch die sie mittels einer nicht dargestellten Schraubverbindung auch direkt mit einer Stromschiene, Montageplatte oder leitenden Montagefläche oder anderen Bauteilen verbunden werden kann.

Ist die Klammer 16 mit dem Träger 10 verbunden, so verläuft eine an der Klammer 16 befestigte elektrische Leitung in Richtung eines Doppelpfeils 30 (siehe Fig. 1). Die elektrische Leitung kann in diesem Fall zusätzlich durch eine Zugentlastung (nicht gezeigt) am Träger 10 befestigt werden. Die Zugentlastung ist dabei vorzugsweise in Form eines Kabelbinders ausgeführt. Der Fortsatz 32 des Trägers 10 weist zwei Ausnehmungen 34a, 34b auf, die eine Taillierung des Fortsatzes 32 bilden. Eine im Bereich der Ausnehmungen 34a, 34b angeordnete Zugentlastung ist dadurch vor Verrutschen gesichert.

Fig. 3 zeigt eine zweite Klammer 16'. Im Gegensatz zur ersten Klammer 16 weist die zweite Klammer 16' größere Ausnehmungen 28a', 28b' der Schenkel 20a', 20b' auf. Die zweite Klammer 16' kann hierdurch elektrische Leitungen mit einem größeren Durchmesser aufnehmen, als die erste Klammer 16. Jedoch entspricht die Dimensionierung des Fußteils 18' der zweiten Klammer 16' der Dimensionierung des Fußteils 18 der ersten Klammer 16. Die zweite Klammer 16' kann daher ebenso wie die erste Klammer 16 mit dem Träger 10 verbunden werden. Auf diese Art und Weise können elektrische Leitungen mit unterschiedlichem Durchmesser elektrisch und/oder mechanisch mit dem Träger 10 verbunden werden. Der Träger 10 kann daher auch bei der Verwendung von elektrischen Leitungen mit unterschiedlichen Durchmessern unverändert eingesetzt werden.

Fig. 4 zeigt einen zweiten Träger 10', der an einer Hutschiene (nicht gezeigt) befestigbar ist. Zur Verbindung des Trägers 10' mit einer Hutschiene, das heißt einer im Querschnitt hutförmig ausgebildeten Stromschiene, weist der Träger 10' zwei elastische Verbindungsteile 38a, 38b auf. Die elastischen Verbindungsteile 38a, 38b sind dabei in der Lage, abstehende Bereiche von der im Querschnitt hutförmig ausgebildeten Stromschiene zu hintergreifen. Im Gegensatz zu dem in Fig. 1 gezeigten Rastvorsprung 26 des ersten Trägers 10 sind im Falle des zweiten Trägers 10' zwei Rastvorsprünge 26a, 26b zur Verrastung einer Klammer am zweiten Träger 10' vorgesehen.

Ein dritter Träger 10" ist in Fig. 5 dargestellt. Der dritte Träger 10" weist einen Verbindungsteil 40 auf, der im Wesentlichen U-förmig ausgebildet ist. Durch den Verbindungsteil 40 kann eine im Querschnitt rechteckige Stromschiene zumindest teilweise umfasst werden. Der Träger 10" kann hierzu einfach in Richtung eines Pfeils 42 auf eine solche, im Querschnitt rechteckig ausgebildete Stromschiene aufgeschoben werden. Ein Falz 44 ist dabei in der Lage, die Stromschiene zu hintergreifen und den Träger 10" auf diese Art und Weise sicher an der Stromschiene halten.

## Patentansprüche

1. Befestigungsvorrichtung zur Ausbildung einer elektrischen und/oder mechanischen Verbindung zwischen einer Stromschiene, Montageplatte oder leitenden Montagefläche und einer elektrischen Leitung, mit mindestens einer Klammer (16, 16'), die einen Fußteil (18, 18') und zwei Schenkel (20a, 20a', 20b, 20b') zu einer durch die Federkraft der Schenkel (20a, 20a', 20b, 20b') bewirkten klemmenden Halterung der Leitung aufweist, wobei die Befestigungsvorrichtung mindestens einen Träger (10, 10', 10") umfasst, der an der Stromschiene, Montageplatte oder leitenden Montagefläche anordenbar und derart ausgebildet ist, den Fußteil (18, 18') der Klammer (16, 16') rastend aufzunehmen, **dadurch gekennzeichnet, dass** mehrere Klammern (16, 16') mit unterschiedlich dimensionierten Schenkeln (20a, 20a', 20b, 20b'), aber gleich großen Fußteilen (18, 18') vorgesehen sind und dass der Träger (10, 10', 10") zwei Rastvorsprünge (14a, 14b) zur Aufnahme der Klammer (16, 16') aufweist, wobei die Vorsprünge (14a, 14b) derart voneinander beabstandet angeordnet sind, dass sie in zwei Eckbereiche einer Ausnehmung des Fußteils (18, 18') der Klammer (16, 16') eingreifen.

2. Befestigungsvorrichtung nach Anspruch 1, **dadurch gekennzeichnet, dass** der Träger (10, 10', 10") mindestens einen weiteren Rastvorsprung (26, 26a, 26b) zur Aufnahme der Klammer (16, 16') aufweist.

3. Befestigungsvorrichtung nach Anspruch 1 oder 2, **dadurch gekennzeichnet, dass** am Träger (10, 10', 10") zumindest ein insbesondere taillierter Fortsatz (32) zur Aufnahme einer Zugentlastung vorgesehen ist.

4. Befestigungsvorrichtung nach einem der vorhergehenden Ansprüche, **dadurch gekennzeichnet, dass** der Träger (10, 10', 10") zumindest einen elastischen Verbindungsteil (38a, 38b, 40) zur Anordnung des Trägers (10, 10', 10") an der Stromschiene, Montageplatte oder leitenden Montagefläche, insbesondere einer im Querschnitt hutförmigen Stromschiene, aufweist.

5. Befestigungsvorrichtung nach Anspruch 4, **dadurch gekennzeichnet, dass** der Verbindungsteil (40) im Wesentlichen U-förmig ausgebildet ist, um die Stromschiene, Montageplatte oder leitende Montagefläche, insbesondere eine im Querschnitt rechteckige Stromschiene, zumindest teilweise umfassen zu können.

6. Befestigungsvorrichtung nach einem der vorhergehenden Ansprüche, **dadurch gekennzeichnet, dass** der Träger (10, 10', 10") rastend an der Stromschiene, Montageplatte oder leitenden Montagefläche befestigbar ist.

7. Befestigungsvorrichtung nach einem der vorhergehenden Ansprüche, **dadurch gekennzeichnet, dass** der Träger (10, 10', 10") mittels einer Schraube elektrisch leitend mit der Stromschiene, Montageplatte oder leitenden Montagefläche verbindbar ist.

8. Befestigungsvorrichtung nach einem der vorhergehenden Ansprüche, **dadurch gekennzeichnet, dass** der Träger (10, 10', 10") einteilig ausgebildet ist.

9. Befestigungsvorrichtung nach einem der vorhergehenden Ansprüche, **dadurch gekennzeichnet, dass** mehrere Träger (10, 10', 10"), insbesondere an Sollbruchstellen, miteinander verbunden sind.

10. Befestigungsvorrichtung nach einem der vorhergehenden Ansprüche, **dadurch gekennzeichnet, dass** die Klammer (16, 16') an ihrem Fußteil (18, 18') eine insbesondere runde Öffnung (36) aufweist.

11. Befestigungsvorrichtung nach einem der vorhergehenden Ansprüche, **dadurch gekennzeichnet, dass** die Klammer (16, 16') einteilig ausgebildet ist.

## Claims

1. Securing device for forming an electrical and/or mechanical connection between a busbar, mounting plate or conductive mounting surface and an electric line, comprising at least one clamp (16, 16') having a base part (18, 18') and two legs (20a, 20a', 20b, 20b') for clamping the line by virtue of the spring force of the legs (20a, 20a', 20b, 20b'), the securing device including at least one support (10, 10', 10") that can be arranged on the busbar, mounting plate or conductive mounting surface and is designed to receive the base part (18, 18') of the clamp (16, 16') in a locking manner, **characterised in that** several clamps (16, 16') having legs (20a, 20a', 20b, 20b') of differing dimensions but base parts (18, 18') of the same size are provided and that the support (10, 10', 10") has two locking projections (14a, 14b) for receiving the clamp (16, 16'), the projections (14a, 14b) being arranged at a distance from one another in such a manner that they engage in two corner regions of a recess in the base part (18, 18') of the clamp (16, 16').

2. Securing device according to claim 1, **characterised in that** the support (10, 10', 10") has at least one further locking projection (26, 26a, 26b) for receiving the clamp (16, 16').

3. Securing device according to claim 1 or claim 2, **characterised in that** at least one extension piece (32), in particular narrowed in the centre, is provided on the support (10, 10', 10") for receiving a cord grip.

4. Securing device according to one of the preceding claims, **characterised in that** the support (10, 10', 10") has at least one flexible connecting part (38a, 38b, 40) for arranging the support (10, 10', 10") on the busbar, mounting plate or conductive mounting surface, in particular a busbar having a hat-shaped cross section.

5. Securing device according to claim 4, **characterised in that** the connecting part (40) is essentially U-shaped so that it can at least partially embrace the busbar, mounting plate or conductive mounting surface, in particular a busbar having a rectangular cross section.

6. Securing device according to one of the preceding claims, **characterised in that** the support (10, 10', 10") can be secured in a locking manner to the busbar, mounting plate or conductive mounting surface.

7. Securing device according to one of the preceding claims, **characterised in that** the support (10, 10', 10") can be connected in an electrically conductive manner to the busbar, mounting plate or conductive mounting surface by means of a screw.

8. Securing device according to one of the preceding claims, **characterised in that** the support (10, 10', 10") is made in one piece.

9. Securing device according to one of the preceding claims, **characterised in that** several supports (10, 10', 10") are connected together, in particular at predetermined breaking points.

10. Securing device according to one of the preceding claims, **characterised in that** the clamp (16, 16') is provided at its base part (18, 18') with an, in particular, round opening (36).

11. Securing device according to one of the preceding claims, **characterised in that** the clamp (16, 16') is made in one piece.

## Revendications

1. Dispositif de fixation destiné à la constitution d'un raccordement électrique et/ou mécanique entre un rail conducteur, une plaque de montage ou une surface de montage conductrice et une ligne électrique, avec au moins une attache (16, 16') qui présente une partie formant pied (18, 18') et deux branches (20a, 20a', 20b, 20b') pour une retenue de la ligne par serrage provoquée par la force de ressort des branches (20a, 20a', 20b, 20b'), dans lequel le dispositif de fixation comprend au moins un support (10, 10', 10") qui peut être disposé sur le rail conducteur, la plaque de montage ou la surface de montage conductrice et est constitué de façon à loger par encliquetage la partie formant pied (18, 18') de l'attache (16, 16'), **caractérisé en ce qu'**il est prévu plusieurs attaches (16, 16') avec des branches (20a, 20a', 20b, 20b') de différentes dimensions mais avec des parties formant pied (18, 18') de même taille, et **en ce que** le support (10, 10', 10") présente deux saillies d'encliquetage (14a, 14b) pour loger l'attache (16, 16'), dans lequel les saillies (14a, 14b) sont disposées espacées l'une de l'autre de telle sorte qu'elles s'engagent dans deux zones de coin d'un creux de la partie formant pied (18, 18') de l'attache (16, 16').

2. Dispositif de fixation selon la revendication 1, **caractérisé en ce que** le support (10, 10', 10") présente au moins une autre saillie d'encliquetage (26, 26a, 26b) pour loger l'attache (16, 16').

3. Dispositif de fixation selon la revendication 1 ou 2, **caractérisé en ce que**, sur le support (10, 10', 10"), il est prévu au moins un prolongement (32) en particulier cintré pour loger une décharge de traction.

4. Dispositif de fixation selon l'une des revendications précédentes, **caractérisé en ce que** le support (10, 10', 10") présente au moins une partie de raccordement (38a, 38b, 40) élastique pour la disposition du support (10, 10', 10") sur le rail conducteur, la plaque de montage ou la surface de montage conductrice, en particulier un rail conducteur dont la section transversale est en forme de chapeau.

5. Dispositif de fixation selon la revendication 4, **caractérisé en ce que** la partie de raccordement (40) est constituée essentiellement en forme de U pour pouvoir englober au moins partiellement le rail conducteur, la plaque de montage ou la surface de montage conductrice, en particulier un rail conducteur dont la section transversale est rectangulaire.

6. Dispositif de fixation selon l'une des revendications précédentes, **caractérisé en ce que** le support (10, 10', 10") peut être fixé par encliquetage sur le rail conducteur, la plaque de montage ou la surface de montage conductrice.

7. Dispositif de fixation selon l'une des revendications précédentes, **caractérisé en ce que** le support (10, 10', 10") peut être raccordé, de façon électriquement conductrice, au rail conducteur, à la plaque de montage ou à la surface de montage conductrice au moyen d'une vis.

8. Dispositif de fixation selon l'une des revendications précédentes, **caractérisé en ce que** le support (10, 10', 10") est constitué en une seule partie.

9. Dispositif de fixation selon l'une des revendications précédentes, **caractérisé en ce que** plusieurs supports (10, 10', 10") sont raccordés les uns aux autres, en particulier au niveau de points de rupture.

10. Dispositif de fixation selon l'une des revendications précédentes, **caractérisé en ce que** l'attache (16, 16') présente au niveau de sa partie formant pied (18, 18') une ouverture (36), en particulier ronde.

11. Dispositif de fixation selon l'une des revendications précédentes, **caractérisé en ce que** l'attache (16, 16') est constituée en une seule partie.
